# EUROPEAN PATENT APPLICATION

(11) **EP 0 855 534 A2**
(43) Date of publication of application: **29.07.1998**
(21) Application number: 98300422.7
(22) Date of filing: 21.01.1998
(51) Int. Cl.: F16F 9/346, B61G 11/12

(54) **Rail car buffer and method**

(30) Priority: 21.01.1997 US 785092; 30.05.1997 US 866617
(71) Applicant: Keystone Industries, Inc., Camp Hill, Pennsylvania 17011 (US)
(72) Inventor: Huggins, Russell J., Wellsville, Pennsylvania 17365 (US); Pershwitz, Julius I., Grantham, Pennsylvania 17027 (US); Scott, Mark P., Boiling Springs, Pennsylvania 17007 (US)
(74) Representative: Warren, Keith Stanley

(57) **Abstract**

A rail car buffer includes a standard capsule body and a fluid spring (42) in the body. The fluid spring includes a piston (64) on an end of a piston (48) rod. During collapse of the spring (42), fluid is displaced from a chamber (68) in front of the piston and impact energy is stored for extending the spring (42). The extension of the spring is snubbed by throttling the flow of fluid back into the chamber. During snubbing, stored impact energy is converted into heat to dissipate stored energy and reduce the impact energy returned to the rail car.

## Description

### Field of the Invention

The invention relates to rail car cushioning devices, particularly rail car buffers, and related methods. Rail car buffers conventionally include a collapsible capsule body surrounding a spring which resists collapse of the buffer. The capsule body includes a tubular base and a tubular plunger fitted inside the base. Buffers are mounted in pairs on the ends of rail cars for contact with buffers mounted on adjacent rail cars to protect the rail cars and lading from excessive forces during impacts, coupling, and normal train action events.

### Background of the Invention

Buffers used in rail cars in European countries are required to meet standards established by the Union Internationale Chemins de Fer (International Union of Railways, (UIC)). The standards permit interchange of rail service between member countries. The UIC standards specify the physical dimensions of the buffer, the stroke of the buffer, the force-travel envelope for the buffer, the energy consumption requirements for the buffer and other characteristics of the buffer.

UIC performance standards for high energy absorption buffers have become ever more stringent. However, the physical size of the buffers has not changed. Some conventional high pressure buffers use a hydraulic spring with hydraulic oil and pressurized gas but require separate chambers for the oil and gas. Some high pressure buffers use a compressible silicone fluid, which is difficult to seal in the buffer. Other conventional buffers meet present UIC high energy standards when new, but in time lose resiliency. Additionally, the useful stroke of these buffers is limited.

### Object of the Invention

The present invention is a rail car buffer, including a hydraulic spring having a housing with opposed front and rear heads and a cylindrical wall extending between the heads, a piston in the cylindrical wall, a piston rod joined to the piston and extending outwardly of the housing through a rod passage in a rear head, a front chamber in the housing between the piston and the front head, a rear chamber in the housing between the piston and the rear head, a storage chamber located outside of the cylindrical wall, a fluid flow aperture communicating the rear chamber and the storage chamber, hydraulic fluid including oil and gas in said chambers, the improvement comprising a one-way valve communicating the forward chamber and the another chamber, said valve permitting flow of hydraulic fluid out of the front chamber and preventing flow of hydraulic fluid into the front chamber, the cylindrical wall including an imperforate portion adjacent the front head, and passage means communicating the front chamber and another chamber for limiting flow of hydraulic fluid into the front chamber to snub expansion of the buffer.

During collapse of the hydraulic spring hydraulic fluid is displaced from the front chamber and impact energy is stored for subsequent extension of the spring. Extension of the spring is snubbed by bleed or throttled flow of fluid back into the front chamber. Fluid may flow into the front chamber through a bleed orifice or a throttling valve. The limited flow of hydraulic fluid into the front chamber snubs expansion of the spring and dissipates stored energy, improving the efficiency of the buffer.

Two embodiments of the invention are disclosed. In a first embodiment the buffer includes a hydraulic spring and an elastomer spring arranged in parallel so that both springs collapse and extend together.

A second embodiment uses a single hydraulic spring charged with hydraulic fluid and a high pressure gas and having a high compression ratio.

### Description of the Drawings

Figure 1 is a top view of a number of rail cars with draw gear connecting the cars and corner buffers;
Figure 2 is a vertical sectional view taken through a first embodiment of a buffer on a rail car;
Figure 3-6 are sectional views taken through the spring assembly of the buffer of Figure 2 during collapse and expansion to the extended position;
Figure 7 is an enlarged view of a check valve shown in Figure 5;
Figure 8 is an enlarged sectional view of an upper corner of a spring assembly illustrating an alternative bleed passage for the buffer shown in Figure 2;
Figures 9 and 10 are graphs illustrating performance characteristics of the first embodiment buffer;
Figure 11 is a partial sectional view taken through a second embodiment of a corner buffer on a rail car;
Figures 12-14 are sectional views taken through the spring of the corner buffer of Figure 11 during collapse and extension;
Figure 15 is a broken away sectional view illustrating an alternative valve location for the buffer shown in Figure 11;
Figure 16 is a view similar to Figure 12 of a third embodiment spring; and
Figures 17 and 18 are graphs illustrating performance characteristics of the second embodiment buffer.

### Description

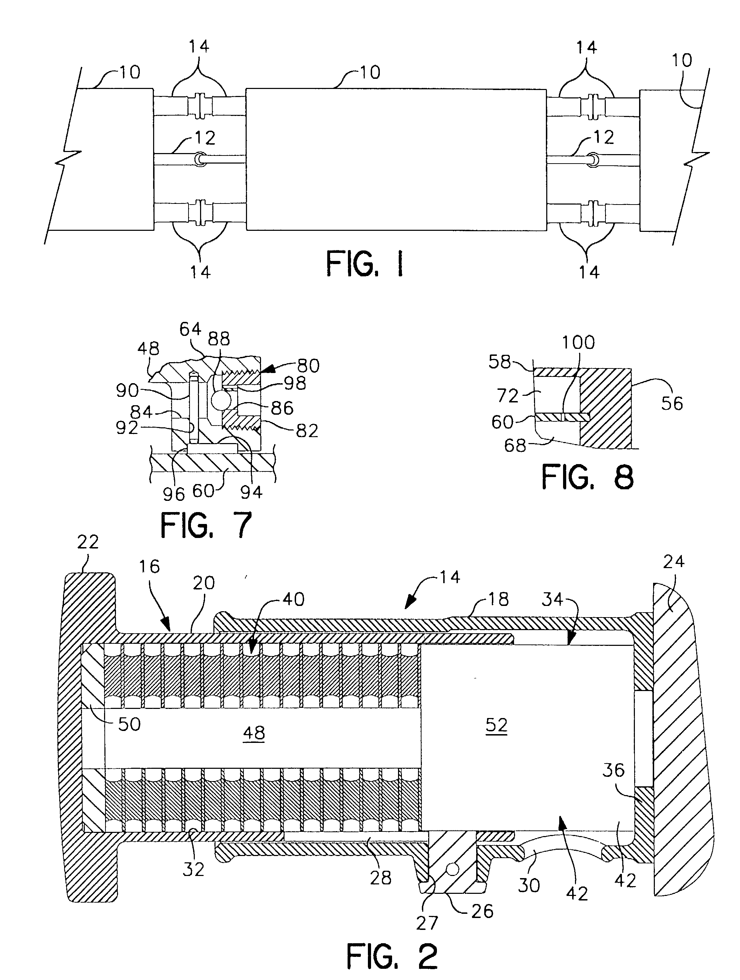

Figure 1 illustrates three rail cars 10 joined together by drawgear 12 to form a train. Corner buffers 14 are mounted on the outer sides of the ends of cars 10 so that the contact heads of adjacent buffers normally engage each other. The buffers absorb and dissipate energy generated by impacts between rail cars during makeup of the train and by train action events, including acceleration and deceleration of the train, movement of the train around curves and the like.

Figures 2-10 illustrate a first embodiment corner buffer 14. As illustrated in Figure 2 corner buffer 14 includes a capsule body 16 with a tubular base 18 and tubular piston or plunger 20 fitted inside base 18. The plunger includes an outwardly facing contact head 22 which engages the corresponding head of the buffer on an adjacent rail car. Base 18 is mounted on and extends outwardly from rail car end 24. The base and plunger are held together by a key or plug 26 mounted in opening 27 at the bottom of the base and extending upwardly into elongate slot 28 formed in the bottom of the plunger. There are other ways of holding the plunger and base together. In Figure 2, the buffer is shown in the fully extended position with plug 26 engaging the end of the slot adjacent the rail car. A drainage opening 30 may be provided at the bottom of base 18. The capsule body may be of conventional design conforming to UIC standards.

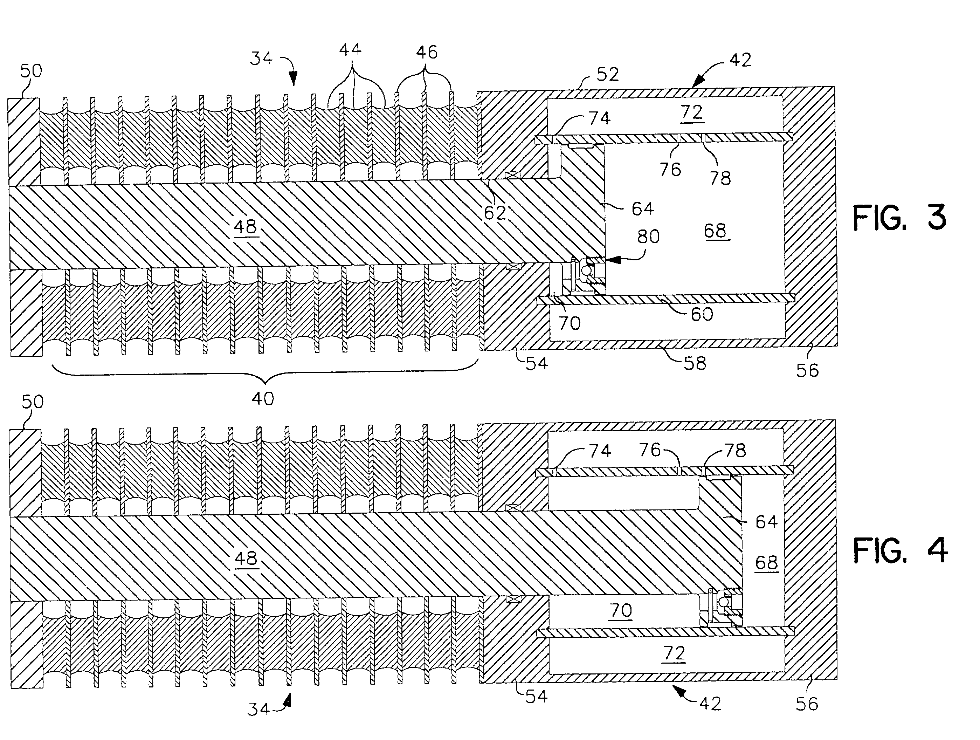

Buffer spring assembly 34 is confined within cylindrical interior chamber 32 of the capsule body and extends between and engages base plate 36 and head 22. Figure 3 illustrates the buffer spring assembly 34 as confined in the fully extended capsule body with the body removed. The spring assembly includes an annular elastomer spring 40 and a gas charged piston-type hydraulic spring 42. Springs 40 and 42 are arranged in parallel so that a load exerted on the buffer collapses both springs together.

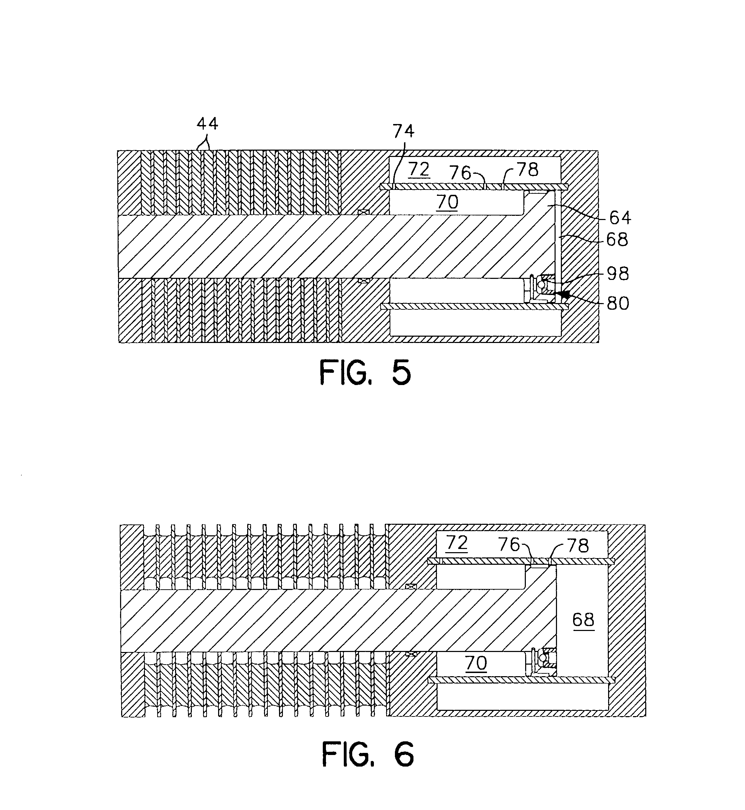

The elastomer spring 40 includes a stack of resilient elastomer ring pads 44 separated by ring-shaped flat metal mounting plates 46. The exterior edges of plates 46 have a loose fit on the interior wall of chamber 32 and the interior edges of the plates have a loose fit on piston rod 48 of gas charged hydraulic spring 42. The elastomer pads 44 are preferably formed from a styrene-butadiene elastomer of the type marketed under the trademark KEY-GARD by Keystone Industries, Inc., of Shiremanstown, Pennsylvania, U.S.A. The elastomer spring 40 is confined between piston rod stop member or end plate 50 and cylindrical piston housing 52 of spring 42. As shown in Figure 5, full collapse of the spring 40 compresses and expands the elastomer pads to nearly fill the space between the piston rod and plunger. The elastomer spring is lightly preloaded when the buffer is extended.

Referring now to Figure 3, piston housing 52 includes a rear head 54 adjacent the elastomer spring, front head 56, and outer and inner cylindrical walls 58, 60 extending between the heads. Piston rod 48 extends into the interior of housing 52 through bore or rod passage 62 in rear head 54. A suitable seal is provided in the bore to prevent leakage of hydraulic fluid from the housing. Piston 64 is provided on the end of piston rod 48 in housing 52 and engages the interior surface of inner wall 60. A suitable seal is provided between the piston and the wall to prevent leakage of hydraulic fluid past the piston. Piston 64 divides the space within wall 60 into front cylindrical chamber 68 in front of the piston and rear cylindrical chamber 70 behind the piston 64. The two walls 58 and 60 define an annular storage chamber 72 surrounding the piston and chambers 68 and 70.

Figure 3 illustrates the position of the buffer spring assembly 34 when the corner buffer 14 is fully extended. Plug 26 engages the inner end of slot 28 and forms a stop preventing further extension of the buffers. In this position, piston 64 is spaced a short distance from rear head 54, the volume of rear chamber 70 is at a minimum and the volume of the front chamber 68 is at a maximum. One or more return fluid flow apertures 74 are formed through wall 60 adjacent rear head 54 to provide continuous unrestricted fluid flow communication between chambers 70 and 72. A pair of fluid flow apertures 76 and 78 extend through wall 60 and are spaced along the longitudinal axis of the assembly to provide fluid flow communication between chamber 72 and chambers 68 and 70, depending upon the axial position of piston 64. During collapse and expansion of the buffer the piston moves past apertures 76 and 78. Spaced apart apertures 76 and 78 are located about two thirds the way along the collapse stroke of the buffer.

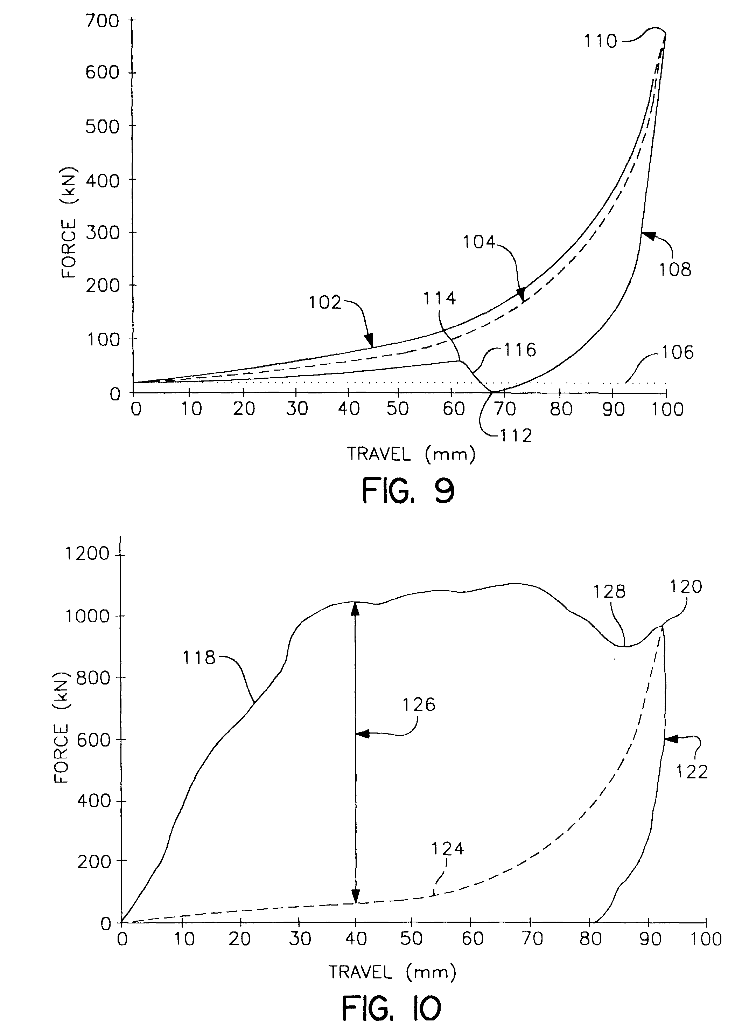

One way ball-type check valve 80 is mounted in the forward face of piston 64, as best illustrated in Figure 7. Check valve 80 includes a cylindrical body 82 threaded into the forward end of a passage 84 extending through the piston and includes a small diameter central bore 86. Spherical ball 88 has a diameter larger than the diameter of bore 86 and is confined in the rear portion of passage 84 between body 82 and a confinement pin 90 extending across passage 84. The pin is seated in a radial bore 92 formed in the circumference of the piston and extending across passage 84. Bore 92 opens into circumferential recess 94 extending around the piston. The recess receives a sealing member 96 forming a seal between the piston and wall 60. Sealing member 96 may include a sealing ring. Other types of check valves may be used, if desired. Check valve 80 need not be mounted in the forward face of piston 64. Alternatively, a check valve to valve 80 preventing flow from chamber 70 to chamber 68 when closed could be mounted in the rear face of the piston. Also, the check valve could be mounted in the front head 56 or the portion of inner cylindrical wall 60 immediately adjacent the front head which is not swept over by the seal between the piston 64 and wall 60. In all cases, a check or one way valve permits flow of fluid out from chamber 68 during collapse of the buffer and prevents flow of fluid into chamber 68 during the extension of the buffer. Fluid may flow into either chamber 70 or 72 during extension. The valve may include a bleed aperture 98, as illustrated in valve 80.

Initial movement of piston 64 away from front head 56 flows a small volume of hydraulic fluid through the check valve and seats ball 88 in bore 86, thereby closing the valve. When the piston is stationary gravity holds the ball away from bore 86, as illustrated in Figure 3, so that the valve is open. The valve is also open during movement of the piston toward front head 56, as illustrated in Figure 4.

A small diameter bleed aperture or bleed orifice 98 extends through check valve body 82 to one side of bore 86. Bleed orifice 98 is open at all times and provides continuous bleed communication into forward chamber 68. Alternatively, the bleed orifice may be provided through the piston away from the valve. Further, a small diameter bleed orifice 100 may be provided through wall 60 adjacent head 56, as shown in Figure 8. The bleed orifice 100 is located sufficiently close to head 56 so that it is not closed when piston 64 is fully extended as shown in Figure 5. A bleed orifice may be provided in head 56 and in communication with chamber 72. Further yet, a bleed orifice may be provided in the piston sealing member 96 to permit continuous bleed communication into chamber 68.

Buffers 14 with bleed orifices and check valves located in different positions as described perform identically. The following description of the operation of buffer 14 will refer to a bleed orifice located in the check valve and to a check valve in the piston, it being understood that the bleed orifice and valve could be located elsewhere.

The chambers 68, 70 and 72 in spring 42 are charged with hydraulic oil and high pressure nitrogen gas. The gas may have a pressure of 56.25 kgf/cm² or more when the buffer is extended. Suitable conventional hydraulic oil and gas filling ports (not illustrated) are provided in housing 52. When the gas and hydraulic oil are separated, the oil fills chambers 68 and 70 and partially fills chamber 72. The gas fills the remainder of chamber 72. In practice, collapse of the buffer mixes the gas and oil to form a gas-entrained oil froth.

When the buffer 14 is fully extended as shown in Figure 2 the buffer spring assembly 34 is positioned as shown in Figure 3 with piston 64 a short distance inwardly from the rear head 54, resulting in a static preload of about 10 kilo newtons (10 kN). The majority of the preload is provided by the pressurized hydraulic fluid acting on the circular forward face of piston 64, which is larger than the annular reverse face of the piston. The elastomer spring pads are preloaded lightly. Plug 26 confines the preloaded buffer spring against further expansion with end plate 50 seated against head wall 38 and rear head 56 seated against base wall 36.

Use of the pressurized gas to provide the required preload for the extended buffer reduces the preload on the elastomer spring and shifts trace 104 of Figure 9 to the left so that the total compression force when the assembly is collapsed at 100 mm does not exceed the maximum allowed force of 1,000 kN. Without the gas pressure preload, the elastomer spring would have to be compressed more to provide the required 10 kN preload. This additional compression would shift the steep rise portion of trace 104 to the left so that the maximum 1,000 kN force would be exceeded before full collapse of the buffer. The usable or effective stroke of the buffer would be reduced because of early stiffening of the elastomer spring. Figure 9 is a graph of force vs. distance for static closure and expansion of buffer 14 where the buffer has been collapsed through a 100 mm stroke at a rate of 10 mm per second and then allowed to expand back to the fully extended position at the rate of 10 mm per second. Trace 102 shows the total compression force exerted by the buffer during collapse and is the total of traces 104 and 106. Trace 104 shows the compression force exerted by the elastomer spring 40 during collapse. Trace 106 shows the compression force exerted by hydraulic spring 42 during static collapse. Trace 108 is the total reaction force exerted by the buffer assembly during expansion from the 100 mm collapsed position back to the fully extended position. Slow static collapse of the buffer at 10 mm per second flows hydraulic fluid through the flow apertures 76 and 78 and valve 80 without generating a significant fluid flow compression force.

As illustrated in Figure 9, static closure of buffer 14 at about 10 mm per second compresses the elastomer spring 40 to generate a compression force trace 104 typical for this type of spring. Upon initial collapse of the elastomer spring, the curve has a shallow positive slope which increases to a near vertical slope at full collapse where the elastomer pads fill the space between plunger 20 and piston rod 48 and the spring becomes stiff. The spring 40 is fully collapsed when plunger 20 engages base 18. As indicated by trace 106, the compression force due to the gas and hydraulic fluid in hydraulic spring 42 increases slightly during collapse of the buffer. This increase is due to extension of piston rod 48 into chamber 70, thereby decreasing the volume of the three chambers 68, 70 and 72 and increasing the pressure of the gas confined in the chambers, which are in communication with each other.

Upon static opening of the collapsed buffer assembly at a controlled rate of 10 mm per second, valve 80 immediately closes preventing flow of hydraulic fluid through bore 86 to reduced volume chamber 68. The elastomer spring 40 exerts a high reaction force biasing the piston back toward the extended position. This force is resisted or snubbed by a pressure differential across piston 64. When the buffer is fully collapsed the volumes of chambers 70 and 72 are reduced to reduce the volume of the compressed gas appreciably and increase gas pressure. The gas pressure may be twice or greater than twice the charging gas pressure. This pressure is exerted on the annular back face of piston 64 and increases during initial return because the gas is further compressed. Upon initial return of the piston valve 80 closes to prevent flow of hydraulic fluid into chamber 68 through the valve and thereby reduces the pressure exerted by the fluid in chamber 68 on the front face of the piston. The pressure may be reduced to as little as about 14 kgf/cm². The pressure differential across the piston slows or snubbs expansion of the buffer assembly from the fully collapsed position of Figure 5 to the position of Figure 6. During this time, there is limited bleed flow of hydraulic fluid into chamber 68 through bleed orifice 98. The restricted flow of hydraulic fluid into chamber 68 allows slow, snubbed expansion of the buffer assembly by elastomer spring 40. Opening of aperture 78 increases the flow of hydraulic fluid from chamber 72 into chamber 68, reduces the pressure differential across the piston and snubbing, increases the reaction force of the buffer and speeds expansion.

Trace 108 indicates the reaction force exerted by the buffer during static opening. The reaction force drops to nearly zero immediately before the piston starts to open aperture 78, as indicated by low point 112 on trace 108. Opening of aperture 78 increases the flow of hydraulic fluid into chamber 68 to reduce the pressure differential and snubbing restraint on expansion of buffer assembly and increase the reaction force of the buffer assembly as indicated by negative slope portion 116 of trace 108. Portion 116 extends from low point 112 to high point 114 where aperture 78 is fully open and flow of hydraulic fluid into chamber 68 is essentially unrestrained. Unrestrained flow of fluid into chamber 68 eliminates the pressure differential across the piston and snubbing. Aperture 78 is typically about six times larger than orifice 98. During the remaining extension of the buffer assembly the hydraulic forces resisting expansion and the elastomer spring force expanding the buffer are gradually reduced. Movement of the piston past aperture 76 does not alter the reaction force.

Figure 10 is a force-travel curve illustrating the compression and reaction forces of buffer 14 during collapse and retraction due to a high speed impact between two rail cars. The graph was generated by using measurements taken from one of two buffers as disclosed mounted on an end of an 80 metric ton rail car which was run against a stationary similar rail car with like buffers at 15.25 kM per hr. The moving car impacted upon the stationary car, following which the stationary car rebounded from the moving car. In Figure 10, trace 118 extending from the origin to peak 120 indicates the compression force exerted by the buffer during impact. Trace 122 extending from peak 120 down to the x-axis shows the reaction force during expansion of the buffer, prior to separation between the rail cars, which occurred before the buffer expanded fully. Trace 124 shows the total compression force of the elastomer spring 40 and the gas pressure component of the hydraulic spring 42. The hydraulic cushioning force provided by the gas filled hydraulic spring 42 is represented by height 126, the vertical distance between trace 124 and trace 128.

The compression force exerted by the elastomer spring is small during initial collapse and increases very rapidly at the end of the stroke. The hydraulic component of the compression force exerted by the hydraulic spring 42 during dynamic collapse of the buffer is velocity dependent. Immediately after impact the buffer is collapsed rapidly forcing the hydraulic fluid in chamber 68 from the chamber through apertures 76 and 78 and the open check valve 80. Collapse is resisted by the resistance to high speed flow of oil through the apertures and valve and increases the hydraulic compression force to about 900 kN at 30 mm collapse. The high hydraulic compression force and conversion of energy to heat are maintained until the collapse velocity of the buffer slows and the compression force exerted by the hydraulic spring decreases at valley 128 in trace 118. After valley 128, the compression force exerted by the buffer increases to peak 120. The impact illustrated in Figure 10 collapsed the buffer approximately 90 mm, somewhat less than the maximum collapse.

Buffer 14 absorbs energy when collapsed during static and impact closure and efficiently dissipates absorbed energy. During static closure, the elastomer spring is compressed. During compression of the spring a slight amount of energy is dissipated as heat. During static expansion the energy stored in the elastomer spring exerts a reaction force which is snubbed. Snubbing converts a large portion of the stored energy into heat, thereby reducing the amount of energy returned to the system during static expansion. UIC standards include the requirement that the ratio of energy absorbed by the buffer (Wa) to the total energy input received by the buffer (We), or Wa/We, be greater than a set value. The Wa/We ratio for buffer 14 during static closure and expansion is greater than 0.50, and meets UIC requirements.

During dynamic closure of buffer 14 initial high speed collapse of the buffer generates high compression forces in the hydraulic spring and conversion of impact energy to heat. During the final portion of the collapse stroke the speed of collapse and the compression force for the hydraulic spring are reduced and the compression force for the elastomer spring is increased. Expansion of the buffer following dynamic closure is snubbed, as described previously, to convert a large portion of the energy stored in the elastomer spring to heat. The Wa/We ratio for buffer 14 during dynamic closure and expansion is greater than 0.60 and meets UIC requirements. Snubbing assures slow initial expansion of the buffer after collapse. After aperture 78 is opened, the buffer expands to the extended position fairly rapidly.

If desired, cylinder wall 60 may be provided with a single flow aperture, rather than the disclosed pair of equal area apertures 76 and 78. Aperture 76 is provided to improve cushioning of impacts. In some applications both apertures 76 and 78 may be eliminated, with resultant prolonged snubbing.

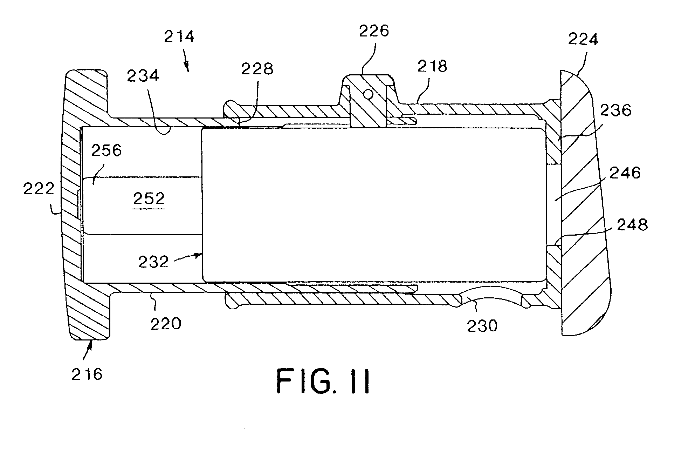

Figures 11-18 illustrate a second embodiment corner buffer 214, similar to corner buffer 14 shown in Figure 1. As illustrated in Figure 11, corner buffer 214 includes a capsule body 216 having a tubular base 218 and a tubular plunger 220 fitted inside the base. The plunger includes an outwardly facing contact head 222 which normally engages the corresponding head of a buffer on an adjacent rail car. Base 218 is mounted on and extends outwardly from rail car end 224. The base and plunger are held together by plug or key 226 mounted in an opening in the base and extending into an elongate slot 228 in the plunger. The key and slot connection permits the plunger to collapse into the base and expand to the extended position shown in Figure 11 with key 226 engaging the inner end of slot 228. A drainage opening 230 is provided in the bottom of base 218.

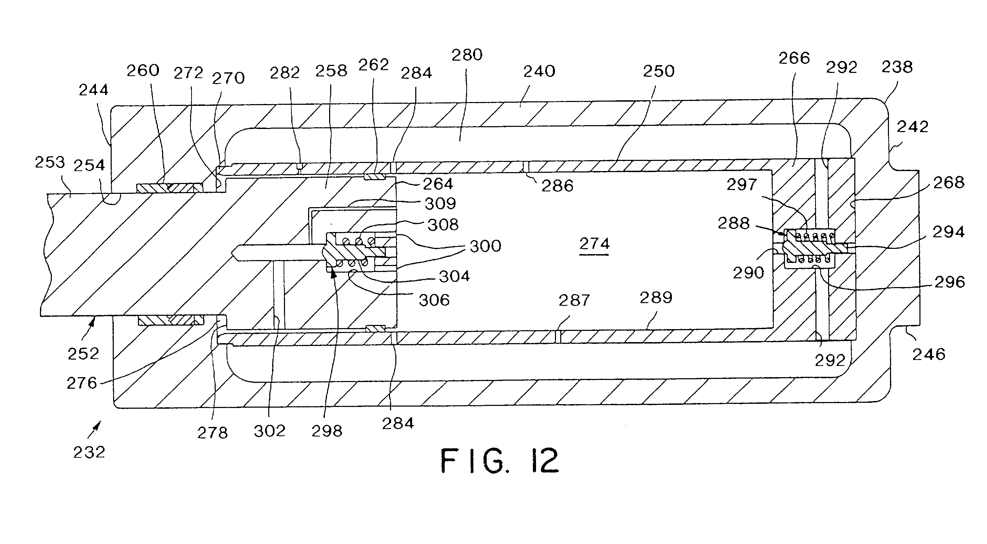

Buffer spring 232 is fitted in cylindrical interior chamber 234 of capsule body 216 and extends between and engages base plate 236 and head 222. As shown in Figure 12, buffer spring 232 is a gas charged hydraulic cylinder having a cylindrical body or housing 238 with an outer cylindrical wall 240, a front head 242 and a rear head 244. Cylindrical projection 246 on head 242 is seated in recess 248 in base plate 236. Cylindrical wall 250 is located inside body 238 and is surrounded by outer cylindrical wall 240. Walls 250 and 240 both extend between heads 242 and 244.

Piston 252 includes a rod 253 which extends through rod bore or passage 254 formed in rear head 244 with outer end 256 engaging contact head 222 and an enlarged head 258 located on the inner end of the piston inside wall 250. High pressure seal 260 in bore 254 engages the piston to prevent leakage of hydraulic fluid from body 238. A circumferential bearing and pressure seal 262 is provided on head 258 immediately adjacent piston front face 264 in order to support the piston in wall 250 and prevent flow of hydraulic fluid between the piston and the wall.

Wall 250 includes closed front end 266 which is seated in a recess 268 in front head 242. The open rear end 270 of wall 250 is seated in a recess 272 in rear head 244. Piston 258 divides the interior volume of cylindrical wall 250 into a cylindrical front chamber 274 located between the piston face 264 and end 266 and an annular rear chamber 276 surrounding rod 253 and located between annular piston rear face 278 and head 244. Chamber 274 extends past piston front face 264 to the front side of seal 262. Likewise, chamber 276 extends past piston rear face 278 along the piston to the rear side of seal 262. Outer cylindrical wall 240 and inner cylindrical wall 250 are spaced apart and define an elongate annular reservoir chamber 280 extending along the walls between heads 242 and 244.

A small diameter bleed orifice 282 extends through wall 250 adjacent rear head 244 and communicates chambers 276 and 280. Four orifices 284 (only two of which are illustrated) extend through wall 250. Orifices 284 are spaced 90° apart around the wall. The orifices 284 are all located at the same longitudinal position on wall 250 as illustrated in Figure 12. When rod 252 is in the fully extended position of in Figure 12 orifices 284 are located immediately adjacent the front side of seal 262 and communicate chambers 274 and 280. During collapse of spring 232 initial movement of rod 252 toward front head 242 moves seal 262 past orifices 284 so that the orifices then communicate chambers 276 and 280.

Impact flow control apertures 286 and 287 extend through wall 250 between apertures 284 and end 266 at spaced longitudinal locations to communicate chamber 280 with either chamber 274 or chamber 276, depending upon the longitudinal position of the piston and seal 262 in the wall. If desired, additional impact flow control apertures may be provided to cushion rail car impacts.

Imperforate portion 289 of wall 250 extends from apertures 287 to front end 266. One-way impact check valve 288 is located at the front end of chamber 274 in front end 266 of wall 250 and communicates chamber 274 with chamber 280 through passage 290 opening into chamber 274 and passages 292 opening into chamber 280. Valve 288 includes a valve body 294 confined in chamber 296 located between passages 290 and 292. A spring 297 normally holds body 294 against a seat at the inner end of passage 290 to prevent flow of hydraulic fluid from chamber 280 past the valve and into chamber 274. During collapse of spring 232 the pressure of hydraulic fluid in chamber 274 is greater than the pressure of fluid in chamber 280 and moves body 294 away from the seat in passage 290 to open valve 288 and permit hydraulic fluid to flow out from chamber 274, past the valve and into chamber 280. Spring 297 holds valve 288 closed and prevents flow of hydraulic fluid into chamber 274 through passage 290 when the pressure in chamber 280 is greater than the pressure in chamber 274.

Pressure sensitive throttling valve 298 is mounted in the front end of piston 258 and communicates chamber 276 with chamber 274 through passage 302 in the piston and passages 300 in the piston face. Passage 302 extends to the side of the piston rearwardly of seal 262. The valve 298 includes a throttling-type valve body 304 mounted in chamber 306 in the piston and engageable with a seat at the adjacent end of passage 302 to prevent outward flow of hydraulic fluid from chamber 274 to chamber 276. Spring 308 normally holds body 304 against the seat to close the valve. Spring 308 holds valve 298 closed until the pressure in chamber 276 is sufficiently greater than the pressure in chamber 274 to overcome the force of spring 308 and shift body 304 away from the seat. The valve cracks or starts to open when the pressure differential reaches a minimum cracking pressure, which may vary from 140.6 kgf/cm² to 281.2 kgf/cm² for buffers complying with UIC standards. Other strength springs may be used, if desired, so that valve 198 opens at other minimum pressure differentials. The valve opens when the pressure differential increases to the minimum and closes when the pressure differential falls below the minimum.

Valve 198 is sensitive to the pressure differential between the two chambers and moves the valve body 304 to increase and decrease the valve opening proportionally to the pressure differential and thereby vary or throttle the flow of fluid past the valve and into chamber 274 as a function of the pressure differential.

Small diameter bleed aperture or orifice or passage 309 is formed in piston head 258 and communicates passage 302 with front chamber 274. Passage 309 extends around the valve 298 to provide a continuous bleed connection between chamber 280 and front chamber 274. The passage 309 has a small diameter of 0.066 cm and a cross-sectional area of 0.003 cm². Passage 309 does not flow an appreciable volume of hydraulic fluid and does not affect normal operation of the buffer spring during static and dynamic collapse and extension.

Housing 238 fits snugly within chamber 234 and is manufactured from a high strength carbon steel alloy having a yield strength of about 827 MPA (Mega Pascals). Construction of the body from high yield strength material is required in order to prevent permanent deformation or rupture of the body by the high pressure hydraulic fluid confined within the body. The fluid is charged into the body at a high pressure. The pressure of the hydraulic fluid is increased during collapse of the buffer because of the high compression ratio.

Spring 232 is charged with hydraulic oil and pressurized gas prior to installation of the spring in capsule body 216. Hydraulic fluid and pressurized nitrogen gas are flowed into the interior volume of the housing through suitable filling ports. With the piston 252 fully extended against rear head 244, the interior chambers of the housing are first charged with sufficient hydraulic oil to completely fill chambers 274 and 276 inside wall 250 when the buffer spring is horizontal. The oil fills all of chamber 280 except for a space at the top of the spring. The passages in wall 50 assure that the chambers inside the wall are filled with hydraulic oil, independent of which side of the spring is up.

After the spring has been filled with hydraulic oil, very high pressure nitrogen gas is charged into the space above the hydraulic oil. Other gases may be used, if desired. The nitrogen gas has a charging pressure of about 147.6 kgf/cm². The gas pressurizes the oil in chamber 274 to hold the piston rod in the extended position with rear face 278 against rear head 244. The high pressure gas dissolves into the hydraulic oil until the oil becomes saturated. Dissolving of the gas into the hydraulic oil reduces the charging pressure from about 147.6 kgf/cm² to a settled pressure of about 133.6 kgf/cm².

After the buffer spring has been charged with hydraulic oil and very high pressure nitrogen gas, it is installed in the capsule body 216. During installation, the plunger is collapsed a short distance to move the piston rear face 278 from the rear head 44 and permit insertion of key 226 as shown in Figure 11. The key limits extension of the spring. The assembled and pressurized buffer is then mounted on a rail car as shown in Figure 1.

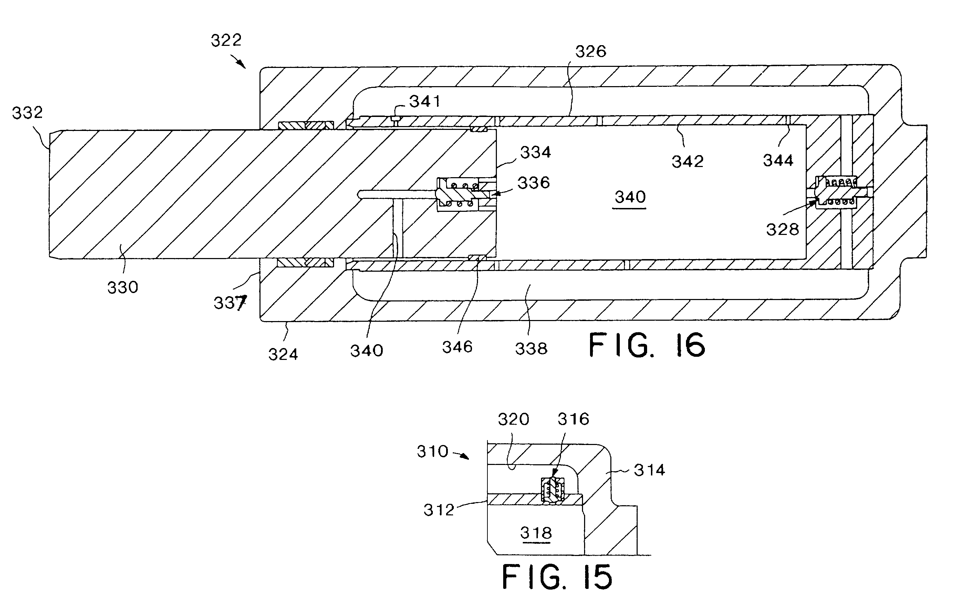

In the embodiment shown in Figures 12-14, wall 250 is provided with a closed end 266 and impact check valve 288 is mounted in the closed end. Figure 15 illustrates a portion of the front end of a buffer spring 310 which is like buffer spring 232 with the exception that the cylindrical wall 312 has an open front end which is seated in a recess in front head 314, in the same way the rear end of wall 250 is seated in rear head 244. An impact check valve 316, like valve 288, is mounted on the front end of wall 312 and communicates front chamber 318 with reservoir chamber 320 through an orifice in the wall. Valve 316 operates in the same way as valve 288 to permit the flow hydraulic fluid from chamber 318 to chamber 320 in response to impact movement of the piston toward the front head. Location of valve 316 in the front end of wall 312 permits elimination of the closed front head and increases the axial length of wall 312, thereby permitting increasing the length of the impact stroke of the piston to improve cushioning efficiency. I f desired, the throttling return valve 298 could be removed from the piston and mounted on wall 250 or in wall 312 between the front end of the wall and the front of seal 262 when the spring is fully collapsed. The return valve could also be mounted in the front end of wall 250, like valve 288.

Figure 16 illustrates an alternative embodiment buffer spring 322 having a body 324 like body 238, and inner cylindrical wall 326 like wall 250 with an impact check valve 328 in the front end of wall 326, like valve 288. Piston 330 has a uniform diameter from free end 332 to front face 334. A return check valve 336, like valve 298, is provided in the front face of piston 330 and communicates outer cylindrical reservoir chamber 338 with front chamber 340 through the flow control orifices or apertures and a bleed orifice or aperture 341 in cylindrical wall 326 and bleed passage 344 in the front end of piston 330. Wall 326 includes an imperforate portion 342, like portion 289. Aperture 341 opens into the space between the front end of the piston and the interior surface of wall 326. Bleed passage 344 extends through wall 326 adjacent the front end of chamber 340. Passage 344 provides bleed communication between chambers 338 and 340 and has a small diameter of 0.066 cm, like passage 309. During full collapse of spring 322 the seal 346 of piston 330 is moved toward the front end of the spring but does not close passage 344. The bleed passage 344 flows hydraulic fluid between chambers 338 and 340 slowly and does not affect normal collapse and extension of buffer spring 322. After the spring 322 has been charged with hydraulic oil and nitrogen gas, the spring is installed in capsule body 216, as described previously. Buffer spring 321 has essentially the same performance characteristics as buffer spring 232.

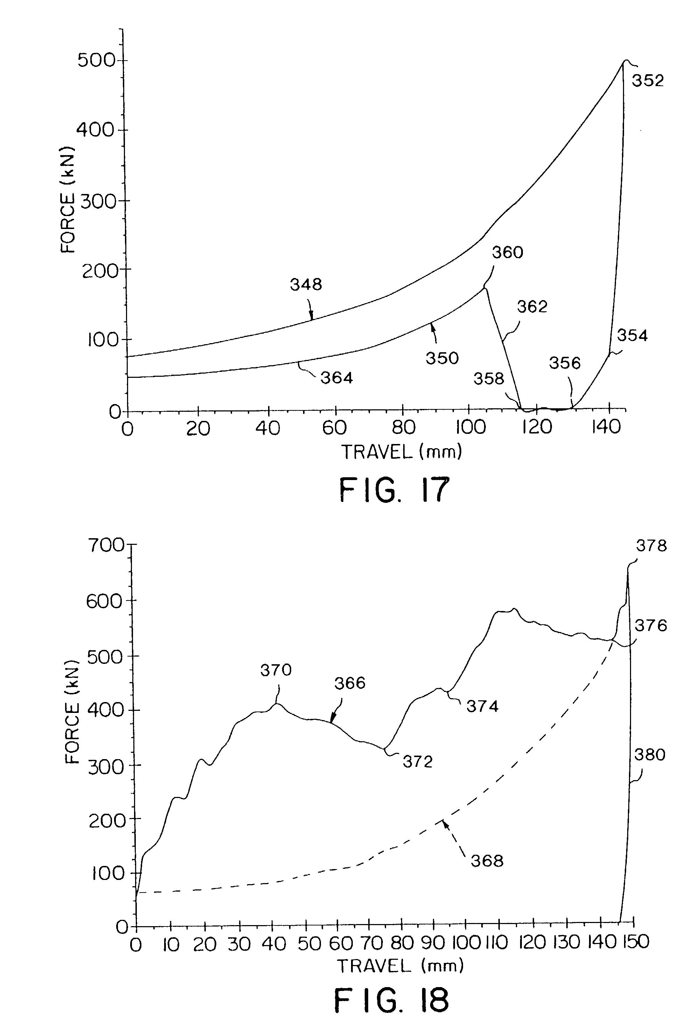

The Figures 17 and 18 graphs illustrate the performance characteristics of a corner buffer as illustrated in Figures 12-14 having a 150 mm stroke. During static collapse and extension at a rate of between 10 and 50 mm per second, the capsule complies with the UIC static closure standards and has a Wa/We ratio greater than 0.50. The Wa/We ratio is achieved by use of a high pressure compressible hydraulic fluid spring alone, without an elastomer spring.

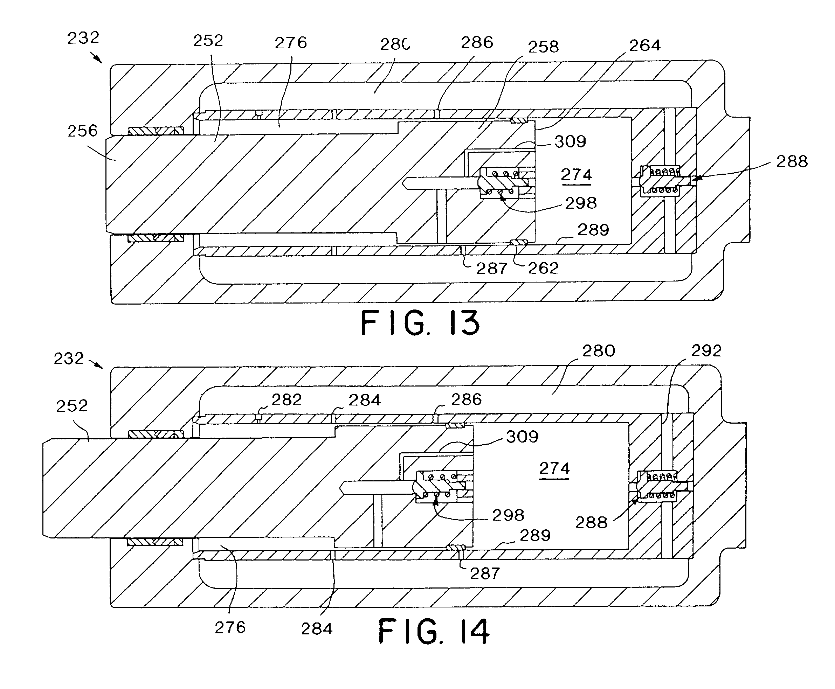

The traces of the Figure 17 graph show force v. distance for a buffer with a spring 232 as disclosed during static closure between faces of a press which are first collapsed 145 mm at the rate of 10 mm per second and then expanded or opened 145 mm at the same rate to return to the start position. The buffer compression and reaction forces are measured by a sensor positioned between the end of the piston 252 and one plate of the press. Trace 348 shows the total compression force exerted by the buffer spring during collapse. Trace 350 shows the reaction force exerted by the spring during extension from the 145 mm collapsed position back to the fully extended position. Slow static collapse of the spring at 10 mm per second flows hydraulic fluid in chamber 274 ahead of piston 258 out of the chamber without substantial hydraulic resistance. Figure 12 shows the spring extended. Figure 13 shows the spring collapsed.

The pressurized hydraulic fluid in spring 232 exerts a preload force of 75.7 kN holding the buffer in the extended position, as indicated in Figure 17 by trace 348 at the 0 mm position. During collapse piston 252 moves into the interior of body 232 and decreases the volume occupied by the hydraulic oil and gas mixture, thereby increasing the pressure of the mixture and the pressure exerted on the piston. Fluid flows freely out of chamber 274 through the flow control apertures during initial slow static collapse. After the piston passes aperture 287, valve 288 opens and hydraulic fluid flows out of the chamber through valve 288. The reduction in the volume of the fluid during collapse increases the compression force as shown by trace 348 to approximately 500 kN at peak 352 the end of the 145 mm collapse stroke. The 145 mm collapse stroke is slightly less than the maximum 150 mm collapse stroke for the spring. The spring has a compression ratio at full 150 mm collapse, as measured by the ratios of the pressures of the hydraulic fluid in the spring when extended and when collapsed, of about 6.2 so that the pressure of the hydraulic fluid when fully collapsed increases from the settled charging pressure of 133.6 kgf/cm² to about 828 kgf/cm². At this high pressure the hydraulic oil is reduced in volume about 4%. During collapse the volume of the hydraulic fluid is reduced 16%. Housing 238 is manufactured from strong alloy steel having a yield strength of 827 MPA, and is not permanently deformed or ruptured by the high pressure of the fluid when the buffer is collapsed.

At the end of the 145 mm static collapse stroke piston seal 262 has been moved past the flow control apertures and along imperforate wall portion 289. Front chamber 274 has a minimum volume and all the hydraulic fluid in spring 232 is at the same pressure. Valve 288 is closed, preventing flow of hydraulic fluid through the valve and into chamber 274. Valve 298 is held closed by spring 308 and prevents flow of hydraulic fluid into chamber 274. The plates of the press then reverse direction and open at the rate of 10 mm per second during the static extension stroke.

When the press starts to expand, the pressurized fluid in closed chamber 274 exerts an outward force on piston face 264 greater than the force exerted on rear face 278 by fluid at the same pressure in chamber 276. The force differential extends the piston a short distance along imperforate wall portion 289. This short extension increases the volume of closed chamber 274, causes the pressure in chamber 274 to decrease below the pressure in chambers 276 and 280 and creates a pressure differential across valve 298. The decrease of pressure in chamber 274 reduces the outward pressure force exerted on the piston face and slows extension. The pressure differential across the valve increases as the volume of chamber 274 increases and the pressure in chamber 274 decreases below the pressure in chambers 276 and 280 until the differential equals the cracking pressure for the valve to overcome the force of spring 308 and open the throttling return check valve 298.

Opening of the valve allows hydraulic fluid to flow from chamber 276 through the valve and into chamber 274. This flow increases the pressure of the fluid in chamber 274 to decrease the pressure differential across the valve below the cracking pressure and close the valve. The flow of fluid into chamber 274 also increases the pressure in the chamber and increases the outward pressure force exerted on the piston face to extend the spring. During extension of the piston along imperforate wall portion 289, the valve 298 opens and closes to limit or throttle the flow of fluid into chamber 274, reduce the outward force exerted on the piston and slow or snub extension of the buffer spring.

During initial 5 mm extension of the buffer following full collapse, the reaction force of the spring rapidly decreases from 500 kN to about 75 kN at point 354 on trace 350 because extension is snubbed. The valve 298 flows fluid into chamber 274 to allow snubbed extension for 10 mm while reducing the reaction force to 0 kN at point 356. The throttled flow of hydraulic fluid into chamber 274 then slows the extension of spring to a rate less than 10 mm per second so that the spring expands slower than the press opens. This starts at point 356, about 130 mm along the collapse stroke and continues for about 15 mm.

At point 358, approximately 115 mm along the collapse stroke, the flow of hydraulic fluid into chamber 274 has increased the rate at which the spring expands, the spring catches up with the press plate and the reaction force then increases to 162 kN at point 352 located at about 105 mm along the collapse stroke. The reaction force increases from 0 kN at point 358 to about 167 kN at point 360 during extension of the spring. Trace portion 362 extending between points 358 and 360 has a negative slope indicating that the reaction force increases with extension of the piston due to reduction of snubbing and increase of outward pressure force exerted on the face of the piston.

At point 360 piston seal 262 passes across the first flow control orifice 287, the pressure differential across valve 298 is eliminated and hydraulic fluid flows into chamber 274 through one or more flow control apertures. During the remainder of the static extension stroke the hydraulic fluid in chamber 274 exerts a pressure force on the piston and extends the spring to the 0 mm position.

The reaction force of the buffer spring as the spring extends from 105 mm to 0 mm along the extension stroke is less than the compression force along the corresponding portion of the collapse stroke, as indicated by trace portion 364 being located beneath trace 348. This is because the frictional forces between the rod and seal 260, and between the seal 262 and wall 250 increase the compression force and reduce the reaction force. Additionally, during collapse of the spring, gas is dissolved into the hydraulic oil, thereby reducing the pressure during the extension stroke.

During static collapse and extension buffer 214 has a Wa/We ratio of more than 0.5, and meets UIC Wa/We standards. The buffer spring uses static collapse energy to pressurize the gas and oil. During static extension a large portion of the stored energy is converted to heat during snubbing. Static collapse energy is also converted directly to heat by friction during both collapse and extension of the buffer.

Figure 18 is a force-travel curve illustrating the compression and reaction forces for a buffer 214 during collapse and extension due to a high speed impact between two rail cars. The graph was generated by using measurements taken from the head end of one of two buffers as disclosed mounted on a 90 metric ton rail car which was run against a stationary 80 metric ton rail car at a speed of 12.13 kph. The moving car impacted the stationary car, following which the stationary car rebounded from the moving car. In Figure 9, trace 366 represents the total compression force of the buffer and is the sum of the static compression force indicated by trace 368, like static trace 348 in Figure 17, and the dynamic compression force resulting from rapid flow of hydraulic fluid through flow orifices in the spring. The dynamic compression force is the vertical distance between traces 368 and 366.

Upon impact, and initial collapse of the buffer, the piston seal 262 immediately moves past the four distribution orifices 284. Further collapse of the buffer rapidly moves the piston toward front end 66 and flows hydraulic fluid out of chamber 274 through the flow apertures. The total compression force indicated by trace 366 rapidly increases above the preload compression force of the spring indicated by trace 368 due to the resistence to flow of hydraulic fluid out of chamber 274. The total compression force reaches a peak 370 at approximately 40 mm of travel and then decreases to low point 372 at about 75 mm of travel, where seal 262 passes over flow aperture 286 to reduce the cross sectional area of the passages flowing hydraulic fluid out of chamber 274 and correspondingly increase the compression force due to hydraulic resistence. Likewise, the seal 262 passes over and closes aperture 287 at low point 374 to again increase -the hydraulic resistence. During further collapse, fluid flows from chamber 274 past open valve 288. Hydraulic resistence is generated until the speed of collapse slows and the hydraulic component of the compression force falls to zero at point 376. During the short remainder of the compression stroke, the compression force follows trace 360 to a peak 378 of about 650 kN at the very end of the stroke. The two cars then rebound from each other and the reaction force of the buffer, as indicated by trace 380, rapidly falls to zero.

Figure 13 illustrates the buffer spring 232 immediately prior to rebound of the rail cars. Piston 252 has moved a distance along imperforate wall portion 289 and is instantaneously motionless in wall 250 and the hydraulic fluid in chamber 274 is at the same pressure as the hydraulic fluid in chamber 280. Valves 288 and 298 are closed. The pressurized fluid in chamber 274 exerts an outward pressure force on the piston which then extends along portion 289 a short distance and decreases the pressure in chamber 274. The decrease in pressure slows extension and generates a pressure differential across valve 298 which then opens to throttle flow of hydraulic fluid into chamber and snub extension, as previously described.

The pressure sensitive valve 298 continuously adjusts the flow of hydraulic fluid into chamber 274 based on the pressure differential across the valve and snubs return of the piston along portion 289, allowing a slow, snubbed extension of the buffer despite the absence of a force exerted on the end of piston 252 resisting extension. Snubbed free extension of the buffer spring 232 continues as the seal 262 moves along portion 289 until the seal passes over aperture 287 and permits free flow of hydraulic fluid from chamber 280 into chamber 274.

After aperture 287 is opened, the pressure of the fluid in chamber 274 extends the piston until seal 262 passes aperture 284 and chamber 276 is communicated with chamber 280 through bleed orifice 282 only. Flow through this orifice is limited and slows final extension as the buffer returns to the fully extended position of Figures 11 and 12.

During free return or extension of the collapsed buffer the throttled flow of hydraulic fluid into chamber 274 slows the rate of extension of spring to between 5 and 15 mm per second for the first 115 mm of extension until seal 262 opens orifice 287. After aperture 287 has been opened and hydraulic fluid flows freely from chamber 280 into chamber 274, the rate of extension of the spring is between 100 and 300 mm per second until the end of the extension stroke when seal 262 passes orifices 284 and extension is slowed by flow through bleed aperture 282.

Buffer spring 232 efficiently absorbs high dynamic impact energy. For some impacts, the Wa/We ratio of the buffer is as high as 90%. Buffer spring 322 shown in Figure 16 operates like buffer spring 232 as previously described.

During initial collapse of buffer spring 232 hydraulic fluid is flowed out of chamber 274 through the impact flow control apertures 286 and 287. Depending upon the strength of spring 297 in valve 288, the valve may open and flow hydraulic fluid out of chamber 274 before the piston seal 262 passes the forward aperture 287 and moves onto the imperforate wall portion 289. Movement of the piston into portion 296 increases the pressure in the chamber to overcome the force of spring 297 and open valve 288 during the remainder of the collapsed stroke.

Buffer 232 is illustrated as having two spaced flow control apertures 286 and 287. Other buffers may have a larger number of flow control apertures in wall 250 in order to generate a dynamic compression force for the spring different than that indicated by the vertical difference between traces 366 and 368 in Figure 18. In such case, it may be desirable to provide a relatively stiff spring 297 in order to assure that valve 288 remains closed until seal 262 has crossed all of the control apertures.

Extension of the collapsed buffer spring 232 along imperforate wall portion 289 requires that the pressure differential across valve 298 increase to the cracking pressure of the valve in order to open the valve and allow hydraulic fluid to flow into chamber 274. In order to generate the pressure differential it is necessary that the hydraulic fluid in the reservoir chamber have a high pressure. Leakage of hydraulic fluid from the buffer or very low ambient temperature may decrease the pressure of the fluid in the reservoir chamber sufficiently that the cracking pressure differential is not achieved and the valve 288 does not open. In this event, the buffer spring cannot expand as described.

Small diameter bleed orifice or passage 309 extends around valve 308 and provides a continuous bleed communication between chambers 280 and 274. In the event the pressure differential between the chambers is insufficient to open valve 298, a very small volume of hydraulic fluid continuously bleeds from higher pressure chamber 280 into chamber 274 in order to increase the pressure in chamber 274 and allow extension of the buffer spring at a very slow rate. Hydraulic fluid bleeds from chamber 280 into chamber 274 until the piston is extended sufficiently to open the first flow control aperture in wall 250, following which the buffer extends as previously described until it is fully extended and is in position to receive and absorb another impact.

Bleed orifice or passage 344 in buffer 322 is located in the portion of imperforate wall 342 adjacent the front head. Piston seal 346 does not cross passage 344. The passage 344 permits slow extension of the spring in the event the pressure differential between chambers 338 and 340 do not reach the cracking pressure.

The disclosed bleed orifices have very small cross-sectional areas, and allow slow flow of very small volumes of hydraulic fluid. This flow does not affect the performance characteristics of buffer springs 232 or 322 during collapse and extension, even though the bleed orifices may be located in the imperforate portion of the cylindrical wall.

The bleed orifice assures a bleed flow of hydraulic fluid into the front chamber when the piston seal has crossed all of the flow control orifices. In order to assure bleed flow of hydraulic fluid into the collapsed front chamber, the orifice must open into the chamber when the piston has been fully collapsed, however the location of the orifice is not critical. The orifice may open into the chamber through the piston, as illustrated in Figure 12, may open into the chamber through the cylindrical wall, as illustrated in Figure 16 or may open into the chamber through the wall at the front end of the chamber.

## Claims

1. A rail car cushioning buffer (14,214) comprising a hydraulic spring (42,232,322) having a housing (52,248,324)with opposed front and rear heads (54,56,242,244,337,314,318) and a cylindrical wall (58,240) extending between the heads, a piston (64,252,330) within the cylindrical wall, a piston rod (48,253) joined to the piston and extending outwardly of the housing through a rod passage (62,254) in the rear head (54,244,337), a front chamber (68,274,340,318) in the housing between the piston and the front head (56,242,314), a rear chamber (70,276) in the housing between the piston and the rear head, structure defining a storage chamber (72,280,320), a fluid flow aperture (74,282,341) communicating the rear chamber and the storage chamber, hydraulic fluid including oil and gas in said chambers, characterised by a one way valve (80,288,328,316) communicating the front chamber and another chamber, said valve permitting flow of hydraulic fluid out of the front chamber and preventing flow of hydraulic fluid into the front chamber, the wall including an imperforate portion (289,342) located adjacent the front head, and passage means (98,298,344,309,336) away from the imperforate portion of the wall communicating the front chamber and another chamber for limiting flow of hydraulic fluid into the front chamber and snub expansion of the buffer.

2. A rail car cushioning buffer as claimed in claim 1 wherein said passage means includes a bleed orifice (309,344,98).

3. A rail car cushioning buffer as claimed in claim 2 wherein the cross section of the bleed orifice (309,344) is about 0.003cm².

4. A rail car cushioning buffer as claimed in claim 1, 2 or 3 wherein said passage means includes a pressure-sensitive throttling valve (298,336).

5. A rail car cushioning buffer as claimed in claim 4 wherein the cracking pressure of the throttling valve (298,336) is between about 140.6kgf/cm² and 281 kgf/cm².

6. A rail car cushioning buffer as claimed in claims 1 to 5 wherein the pressure of the hydraulic fluid when the buffer is extended is between about 56.25kgf/cm² and about 147.6 kgf/cm².

7. A rail car cushioning buffer as claimed in any preceding claim wherein the hydraulic spring has a compression ratio of greater than 6.0, for example about 6.2.

8. A rail car cushioning buffer as claimed in any preceding claim wherein the hydraulic spring has a preload of about 75.7kN when the buffer is extended.

9. A rail car cushioning buffer as claimed in any of preceding claims 1, 2, 3, 6, 7 and 8, including an elastomer spring (40) in parallel with the hydraulic spring (14).

10. A rail car cushioning buffer as claimed in claim 9 wherein said elastomer spring (40) is formed from styrene-butadiene elastomer and surrounds the piston rod.

11. A rail car cushioning buffer as claimed in any preceding claim including one or more flow apertures (76,78,286,287,284) extending through the wall at locations between the imperforate portion and the rear head, each aperture opening into the storage chamber.

12. The method of cushioning a rail car impact by using a buffer of the type including a hydraulic spring (14,214) having a piston (64,252,330), a piston chamber (68,274,340,318) in front of the piston, a storage chamber (72,280,320,338) and hydraulic fluid in the chambers, characterised by the steps of:
a) exerting an impact on a buffer in the extended position to flow hydraulic fluid out of the piston chamber and into the storage chamber, compress the hydraulic fluid and collapse the buffer; and
b) returning the collapsed buffer to the extended position by limiting return flow of compressed hydraulic fluid from the storage chamber into the piston chamber, converting energy stored in the compressed hydraulic fluid to heat and snubbing expansion of the hydraulic spring.
